# EUROPÄISCHE PATENTSCHRIFT

(11) **EP 3 832 020 B1**
(45) Veröffentlichungstag und Bekanntmachung des Hinweises auf die Patenterteilung: **17.05.2023**
(21) Anmeldenummer: 20211016.9
(22) Anmeldetag: 01.12.2020
(51) Int. Cl.: E01C 23/088, E01C 23/12, B28D 7/02, B65G 69/18

(54) **BODENBEARBEITUNGSMASCHINE MIT GEFILTERTER STAUBABSAUGUNG MIT ELASTISCH VERFORMBAREM FILTERGEHÄUSE**
SOIL TREATMENT MACHINE WITH FILTERED DUST EXTRACTION WITH ELASTICALLY DEFORMABLE FILTER HOUSING
MACHINE DE TRAITEMENT DE SOLS AVEC EXTRACTION DE POUSSIÈRE FILTRÉE AVEC BOÎTIER DE FILTRE À DÉFORMATION ÉLASTIQUE

(30) Priorität: 03.12.2019 DE 102019132892
(43) Veröffentlichungstag der Anmeldung: 09.06.2021
(73) Patentinhaber: Wirtgen GmbH, 53578 Windhagen (DE)
(72) Erfinder: Drumm, Stephan, 53560 Vettelschoß (DE)
(74) Vertreter: Ruttensperger Lachnit Trossin Gomoll

(56) Entgegenhaltungen:
- DE-B3-102004 007 716

## Beschreibung

Die vorliegende Erfindung betrifft eine mobile Bodenbearbeitungsmaschine, wie etwa eine Straßenfräse, einen Recycler oder einen Surface-Miner, wobei die Bodenbearbeitungsmaschine umfasst:
- eine Arbeitsvorrichtung zur Material abtragenden Bearbeitung eines Bereichs eines Bodens, und
- eine Absaugeinrichtung, welche dazu ausgebildet ist, staubbelastete Luft an wenigstens einem Absaugort aus wenigstens einem Maschinenbereich abzusaugen und abgesaugte Luft an einem vom Absaugort verschiedenen Abblasort auszublasen,
wobei die Absaugeinrichtung eine längs eines Betriebsströmungswegs vom wenigstens einen Absaugort zum Abblasort angeordnete Filtervorrichtung aufweist, wobei die Filtervorrichtung umfasst:
- ein Filtergehäuse, und
- einen im Filtergehäuse aufgenommenen Filterkörper, wobei der Filterkörper dazu ausgebildet ist, Staubpartikel aus der die Filtervorrichtung durchströmenden Luft zu entfernen.

Eine solche Bodenbearbeitungsmaschine in Ausführungsform einer Boden-, insbesondere Straßenfräsmaschine ist beispielsweise aus der DE 10 2004 007 716 B3 bekannt.

Das von der Arbeitsvorrichtung abgetragene Bodenmaterial wird - im Stand der Technik ebenso wie bevorzugt auch in der vorliegenden Erfindung - ausgehend von einem Arbeitsvorrichtungsgehäuse, in welchem die Arbeitsvorrichtung zur Ausführung einer Abtragsbewegung beweglich aufgenommen ist, mittels eines Transportbandes zu einem Abgabeort gefördert. Das Arbeitsvorrichtungsgehäuse schirmt als Arbeitsschutzvorrichtung die Umgebung der Arbeitsvorrichtung vor der Arbeitsvorrichtung und dem durch sie abgetragenen Bodenmaterial ab. Am Abgabeort wird das geförderte abgetragene Bodenmaterial in der Regel abgeworfen, häufig auf ein die mobile Bodenbearbeitungsmaschine begleitendes Fahrzeug, welches das aufgenommene abgetragene Bodenmaterial entsorgt oder weiterverarbeitet.

Am Eingriffsort der abtragenden Arbeitsvorrichtung mit dem zu bearbeitenden Boden werden Bodenmaterialstücke unterschiedlich großer Körnung aus dem Boden herausgetrennt. Diese Bodenmaterialstücke bewegen sich mit hoher kinetischer Energie in dem Arbeitsvorrichtungsgehäuse und prallen auf die Wandung des Arbeitsvorrichtungsgehäuses, kollidieren untereinander oder/und mit Wirkflächen von Auswerfern an der Arbeitsvorrichtung sowie mit der Arbeitsvorrichtung selbst. Bei diesen Kollisionen entstehen, wie schon beim Abtrag des Bodenmaterials durch die Arbeitsvorrichtung, Stäube unterschiedlicher Körnung bis hin zum Feinstaub. Es sind diese Stäube, die die durch die Absaugeinrichtung abgesaugte Luft belasten. Die Stäube können in dem Arbeitsvorrichtungsgehäuse oder/und beim Transport des abgetragen Bodenmaterials in den das abgetragene Bodenmaterial umgebenden Luftraum übergehen. Dies gilt für den Stand der Technik ebenso wie für die vorliegende Erfindung.

Bereits die DE 102 23819 A1 lehrt, die durch die Bodenbearbeitung entstehende staubbelastete Luft an einem näher bei der Arbeitsvorrichtung gelegenen Absaugort abzusaugen und in einem weiter von der Arbeitsvorrichtung entfernt gelegenen Abblasort auf das Transportband abzublasen. Durch eine Berieselungseinrichtung, welche die Umgebung des Abblasorts mit Wasser berieselt oder/und durch eine elektrostatische Abscheidevorrichtung kann Staub in der am Abblasort abgeblasenen Luft aus der Luft entfernt werden.

Die DE 10 2004 007 716 B3 lehrt, zur Erhöhung der Standfestigkeit eines die staubbelastete Luft fördernden Fördergebläses eine Filtervorrichtung im Strömungsweg der staubbelasteten Luft vom Absaugort zum Abblasort stromaufwärts des Fördergebläses anzuordnen und so die Luft zu reinigen, bevor sie das Fördergebläse erreicht. Die bekannte Filtervorrichtung umfasst ein Filtergehäuse, in welchen eine Mehrzahl von sogenannten "Filterkartuschen" als Filterkörper aufgenommen ist, um eine möglichst große Filterfläche zu erzielen.

Da die Filterkörper auf ihrer Schmutzseite mit zunehmender Dauer des Filterbetriebs einen Filterkuchen bilden, welcher bei Überschreiten einer kritischen Größe die Filterwirkung des jeweiligen Filterkörpers beeinträchtigt, lehrt die DE 10 2004 007 716 B3 weiterhin, die Filterkörper durch Vibration oder durch einen auf der Reinseite des Filterkörpers realisierten Druckluftimpuls vom Filterkuchen zu befreien. Der vom Filterkörper abgereinigte Filterkuchen kann durch eine Klappe im Boden des Filtergehäuses auf das Transportband abgegeben werden oder kann in einen an einer Öffnung des Filtergehäuses befestigten Staubsammelsack eingefüllt werden. Das Filtergehäuse ist über dem Transportband angeordnet. Das Transportband ist durch eine Abdeckung von der Außenumgebung abgeschirmt, sodass auf dem Transportband aufliegendes Bodenmaterial nicht oder nur in sehr geringem Umfang vom Transportband während der Förderung bis zum Abgabeort in die Umgebung gelangen kann.

Ein weiteres Problem der Filtervorrichtung kann darin bestehen, dass die abgesaugte staubbelastete Luft einen hohen Feuchtigkeitsgehalt aufweist oder/und dass der Staub selbst feucht ist. Ursache hierfür kann beispielsweise eine Wassereinspritzung im Arbeitsvorrichtungsgehäuse sein, durch welche während der Bodenbearbeitung in unmittelbarer Umgebung der Arbeitsvorrichtung entstehenden Staub frühzeitig gebunden werden soll. Diese Feuchtigkeit in der staubbelasteten Luft kann zu einem Verbacken von Staub und Filterkuchen im Filtergehäuse führen. Da der Staub und der daraus sich bildende Filterkuchen überwiegend mineralischer Natur sind, führt zusätzliche Feuchtigkeit häufig zu einem mörtelartigen Aushärten des feuchten Filterkuchens.

Es ist daher Aufgabe der vorliegenden Erfindung, die eingangs genannte mobile Bodenbearbeitungsmaschine derart weiterzubilden, dass ihre Filtervorrichtung einfach und sicher auch von verbacktem, ausgehärtetem Partikelmaterial befreit werden kann.

Diese Aufgabe wird erfindungsgemäß durch eine mobile Bodenbearbeitungsmaschine der eingangs genannten Art gelöst, deren Filtervorrichtung eine Verformungsaktuatoranordnung aufweist, welche mit wenigstens einer Wand des Filtergehäuses derart Kraft übertragend in Wechselwirkung steht, dass durch Betätigung der Verformungsaktuatoranordnung die wenigstens eine Wand des Filtergehäuses orthogonal zu seiner Wandfläche verformbar ist. Durch Ausnutzung dieser Verformbarkeit, also durch Verformung der wenigstens einen Wand des Filtergehäuses orthogonal zu seiner Wandfläche kann verbacktes mineralisches Partikelmaterial von den Innenwänden des Filtergehäuses gelöst werden.

Zur erleichterten Verformbarkeit der wenigstens einen Wand des Filtergehäuses kann diese aus einem Werkstoff mit einem geringeren Elastizitätsmodul gebildet sein als andere Wände, Wandabschnitte oder Gehäuseabschnitte des Filtergehäuses. Aus Gründen einer möglichst großen Robustheit des Filtergehäuses ist dieses möglichst umfangreich aus Metall, insbesondere aus Metallblech gebildet. Die wenigstens eine verformbare Wand des Filtergehäuses kann aus einem Kunststoff, insbesondere einem Elastomer, wie etwa Gummi oder Silikonkautschuk gebildet sein oder einen solchen Werkstoff wenigstens abschnittsweise umfassen.

Grundsätzlich kann eine mechanisch die wenigstens eine Wand verformende Verformungsaktuatoranordnung vorgesehen sein, die etwa mit einem verlagerbaren Stößel abhängig von der Stößelstellung auf die verformbare Wand einwirkt oder nicht.

Zur Förderung der staubbelasteten Luft kann die Bodenbearbeitungsmaschine in vorteilhafter Weiterbildung der Erfindung ein Fördergebläse aufweisen, wobei die Filtervorrichtung, insbesondere der Filterkörper, bevorzugt auf der Saugseite des Fördergebläses liegt, sodass die vom Fördergebläse geförderte Luft das Fördergebläse in gereinigtem Zustand erreicht. Je weniger Staubpartikel in der geförderten Luft enthalten sind, desto weniger abrasiv wirkt die geförderte Luft auf das Fördergebläse. Das Fördergebläse kann einen gegenüber staubbelasteter Luft robusten Axiallüfter umfassen. Alternativ kann das Fördergebläse einen weniger Bauraum als ein Axiallüfter gleicher Förderleistung einnehmenden Radiallüfter umfassen.

Bevorzugt umfasst oder ist zur Vermeidung von zusätzlichen Komponenten die Verformungsaktuatoranordnung das die staubbelastete Luft vom wenigstens einen Absaugort zum Abblasort fördernde Fördergebläse. Da das Filtergehäuse bevorzugt auf der Saugseite des Fördergebläses angeordnet ist, erzeugt der Betrieb des Fördergebläses im Filtergehäuse einen Unterdruck gegenüber dem Umgebungsdruck. Durch diesen Unterdruck kann die wenigstens eine verformbare Wand in das Filtergehäuse hinein wölbend verformt werden. Die durch das Fördergebläse verformte Wand ist bei Betrachtung des Filtergehäuses von außen konkav geformt. Ihre ins Innere des Filtergehäuses weisende Innenseite ist dementsprechend - bei Betrachtung der Innenseite von innen - konvex gewölbt.

Zur Erhöhung der Standzeit des wenigstens einen Filterkörpers kann die Bodenbearbeitungsmaschine eine Reinigungsvorrichtung aufweisen, welche dazu ausgebildet ist, Staubpartikel, die sich im Filterbetrieb am Filterkörper ansammeln, vom Filterkörper zu entfernen.

Die Reinigungsvorrichtung kann zur Reinigung des wenigstens einen Filterkörpers im Filtergehäuse eine Pneumatikvorrichtung aufweisen, welche dazu ausgebildet ist, auf der Reinseite des Filterkörpers den Luftdruck über den auf der Schmutzseite des Filterkörpers herrschenden Luftdruck hinaus zu erhöhen. Die Pneumatikvorrichtung umfasst bevorzugt wenigstens einen Pneumatik-Druckspeicher und wenigstens ein Ventil. Der Pneumatik-Druckspeicher befindet sich bevorzugt am Filtergehäuse, besonders bevorzugt außen am Filtergehäuse, sodass er den wenigstens einen Filterkörper im Inneren des Filtergehäuses nicht stört.

Um nicht nur durch Druckerhöhung, sondern durch Druckstöße auf der Reinseite eine zusätzliche Abwurfwirkung von Filterkuchen auf der Schmutzseite zu bewirken, kann die Steuervorrichtung bevorzugt dazu ausgebildet sein, die Pneumatikvorrichtung zur stoßartigen Abgabe von Pneumatikimpulsen anzutreiben.

Zusätzlich oder alternativ kann zur Vermeidung von zusätzlichen Komponenten die Verformungsaktuatoranordnung die oben beschriebene Pneumatikvorrichtung umfassen oder sein. Die Pneumatikvorrichtung ist, wie beschrieben, dazu ausgebildet, im Filtergehäuse einen Überdruck gegenüber dem Umgebungsdruck zu erzeugen. Durch diesen Überdruck kann die wenigstens eine verformbare Wand aus dem Filtergehäuse hinaus wölbend verformt werden. Die durch die Pneumatikvorrichtung verformte Wand ist bei Betrachtung des Filtergehäuses von außen konvex geformt. Ihre ins Innere des Filtergehäuses weisende Innenseite ist dementsprechend - bei Betrachtung der Innenseite von innen - konkav gewölbt.

Umfasst die Verformungsaktuatoranordnung sowohl das Fördergebläse als auch die Pneumatikvorrichtung, kann durch eine schwellende oder wechselnde Druckbeaufschlagung des Innenraums des Filtergehäuses die wenigstens eine verformbare Wand einer Walkverformung unterzogen werden, sodass gebundenes, ausgehärtetes Staubpartikelmaterial, das ursprünglich an der verformbaren Wand anhaftete, davon abplatzt. Dies ist mit vorteilhafter Walkamplitude dann möglich, wenn die Wand, wie oben geschildert, wenigstens teilweise, bevorzugt vollständig, aus einem Kunststoff, insbesondere einem Elastomer, wie etwa Gummi oder Kautschuk, gebildet ist.

Zum Entfernen von abgereinigtem Staubpartikelmaterial aus dem Filtergehäuse, sei es nun Staubpartikelmaterial vom Filterkörper oder von einer Wand des Filtergehäuses, kann das Filtergehäuse eine zwischen einer Öffnungsstellung und einer Schließstellung verstellbare Auslassformation, etwa ein beweglicher oder/und verformbarer Abschnitt eines Filtergehäusebodens, aufweisen, welche in ihrer Öffnungsstellung eine Auslassöffnung im Filtergehäuse öffnet. Durch die Auslassöffnung ist im Filtergehäuse angesammeltes Staubpartikelmaterial aus dem Filtergehäuse entfernbar. Wenigstens der Boden des Filtergehäuses ist bevorzugt als die oben beschriebene verformbare Wand ausgebildet, um so ohne übermäßige Erhöhung der erforderlichen Bauteileanzahl auch die Auslassöffnung ausbilden zu können.

Wie eingangs bereits geschildert, weist die Bodenbearbeitungsmaschine bevorzugt eine Transportvorrichtung auf, durch welches von der Arbeitsvorrichtung abgetragenes Bodenmaterial in Richtung von der Arbeitsvorrichtung weg zu einem Abgabeort förderbar ist. Um die pro Zeiteinheit anfallenden Mengen an abgetragenem Bodenmaterial sicher abtransportieren zu können umfasst die Transportvorrichtung bevorzugt als Transportmittel wenigstens ein Förderband, vorzugsweise wenigstens zwei in Förderrichtung aufeinander folgende Förderbänder, welche zur Reduzierung der Schmutzbelastung der Umgebung der Bodenbearbeitungsmaschine über wenigstens 90 % ihrer Förderstrecke eingehaust ist bzw. sind. Es sind jedoch auch andere Transportvorrichtungen nicht ausgeschlossen, wie beispielsweise Schneckenförderer und dergleichen.

Das Filtergehäuse der vorliegenden Erfindung, ebenso wie das aus der DE 10 2004 007 716 B3 bekannte Filtergehäuse, ist bevorzugt über einem Transportmittel einer Transportvorrichtung zur Förderung des abgetragenen Bodenmaterials von dem Arbeitsvorrichtungsgehäuse weg zu einem Abgabeort angeordnet. Auf dieses Transportmittel kann Staubpartikelmaterial vorteilhaft vom Filtergehäuse aus abgegeben werden.

In der vorliegenden Anmeldung ist zur Beschreibung der vorgestellten Erfindung von einem Filterkörper die Rede. Dies dient lediglich der Veranschaulichung und ist keine Mengenangabe. Wenngleich ein einziger Filterkörper ausreichen kann, weist die Filtervorrichtung der vorliegenden Erfindung bevorzugt eine Mehrzahl von Filterkörpern auf, von welchen bevorzugt jeder um eine Drehachse drehbar im Filtergehäuse gelagert ist. Dann sind bevorzugt die Drehachsen der Filterkörper zur vorteilhaft effizienten Ausnutzung des vorhandenen Bauraums zueinander parallel.

Wenn in der vorliegenden Anmeldung von einer bestimmungsgemäß lösbaren Anordnung die Rede ist, so ist damit eine zerstörungsfrei lösbare Anordnung bezeichnet, wie sie beispielsweise durch Schraubverbindungen, Bajonettverbindungen und dergleichen bewirkt werden kann, im Gegensatz zu nicht-lösbaren Anordnungen, wie beispielsweise Schweiß- oder Nietverbindungen, welche lediglich zerstörend aufgehoben werden können.

Ein verschlissener Filterkörper kann dadurch besonders einfach und schnell gegen einen unverschlissenen ausgetauscht werden, wenn er an einem Längsende, bevorzugt nur an einem Längsende, mit einer Filterkörperaufnahme lösbar koppelbar ist. Dabei reicht es zur Erzielung einer bevorzugten Drehbarkeit des Filterkörpers aus, wenn die am Filtergehäuse angeordnete Filterkörperaufnahme um die Drehachse drehbar im oder am Filtergehäuse aufgenommen ist. Der Filterkörper selbst braucht dann keinerlei Drehbarkeit bereitzustellen oder/und keinerlei Formation aufzuweisen, um von einem Drehantrieb ein Antriebsdrehmoment auf den Filterkörper zu übertragen. Eine solche mit dem Drehantrieb wechselwirkende Formation kann alleine an der Filterkörperaufnahme ausgebildet sein.

Grundsätzlich weist der Filterkörper eine bezüglich einer Betriebsströmungsrichtung der staubbelasteten Luft vom Absaugort zum Abblasort stromaufwärts eines die Filterwirkung des Filterkörpers bereitstellenden porösen Filtermaterials gelegene Schmutzseite und eine stromabwärts des Filtermaterials gelegene Reinseite auf.

Sofern in der vorliegenden Anmeldung nichts Abweichendes gesagt ist, beziehen sich die Angaben "stromaufwärts" und "stromabwärts" auf die Betriebsströmungsrichtung der staubbelasteten Luft vom Absaugort zum Abblasort.

Der Absaugort liegt näher bei der Arbeitsvorrichtung als der Abblasort, weil in einem zur Arbeitsvorrichtung führenden Luftkanal die Staubbelastung der Luft mit zunehmender Annäherung an die Arbeitsvorrichtung ansteigt.

Um die Belastung des Filterkörpers der Filtervorrichtung im Filterbetrieb zu verringern, kann die Filtervorrichtung einen vom Filterkörper verschiedenen Vorfilter aufweisen, welcher bevorzugt außerhalb des Filtergehäuses angeordnet ist, sodass nur vorgereinigte staubbelastete Luft zum Filterkörper geleitet wird. Als derartige Vorfilter haben sich sogenannte Zyklonfilter bewährt, welche Staubpartikel oberhalb einer bestimmten Korngröße aus der staubbelasteten Luft entfernen. Somit erreichen den wenigstens einen Filterkörper im Filtergehäuse bevorzugt nur Staubpartikel unterhalb einer bestimmten Korngröße oder eines bestimmten Korngrößenbereichs. Das Filtermaterial des Filterkörpers kann hinsichtlich seiner Porosität und seiner Durchlässigkeit auf den Korngrößenbereich der Staubpartikel in der vorgereinigten Luft besonders gut abgestimmt werden, sodass die Reinigungswirkung des Filterkörpers weiter erhöht werden kann.

Gemäß einer vorteilhaften Weiterbildung ist das Filtergehäuse derart über der Transportvorrichtung angeordnet ist, dass sich die Auslassöffnung dann, wenn die Auslassformation sich in der Öffnungsstellung befindet, zur Transportvorrichtung hin öffnet. Dann kann das, in der Regel mineralisch gebundene, Staubpartikelmaterial schwerkraftgetrieben das Filtergehäuse verlassen und die Transportvorrichtung erreichen, wo es mit dem abgetragenem Bodenmaterial zum Abgabeort transportiert wird.

Die vorliegende Erfindung wird nachfolgend anhand der beiliegenden Zeichnungen erläutert. Es stellt dar:
- Fig. 1: eine grobschematische Seitenansicht einer erfindungsgemäßen Bodenbearbeitungsmaschine während einer Bodenmaterial abtragenden Bearbeitung,
- Fig. 2: eine ausschnittsweise Vergrößerung des Abwurfbandes der Transportvorrichtung mit daran angeordneter Filtervorrichtung der Bodenbearbeitungsmaschine von Figur 1 in perspektivischer Ansicht,
- Fig. 3: eine perspektivische grobschematische Ansicht der Filtervorrichtung von Figur 2, einschließlich Vorfilter der Bodenbearbeitungsmaschine von Figur 1,
- Fig. 4: eine perspektivische grobschematische Ansicht der Filtervorrichtung von Figur 3, ohne Vorfilter, von schräg vorne und oben,
- Fig. 5: eine vergrößerte grobschematische Seitenansicht des Bypass-Ventils der Filtervorrichtung der Bodenbearbeitungsmaschine von Figur 1, und
- Fig. 6: eine grobschematische beispielhafte Querschnittansicht durch das Filtermaterial eines Filterkörpers der Filtervorrichtung der Figuren 1 bis 5.

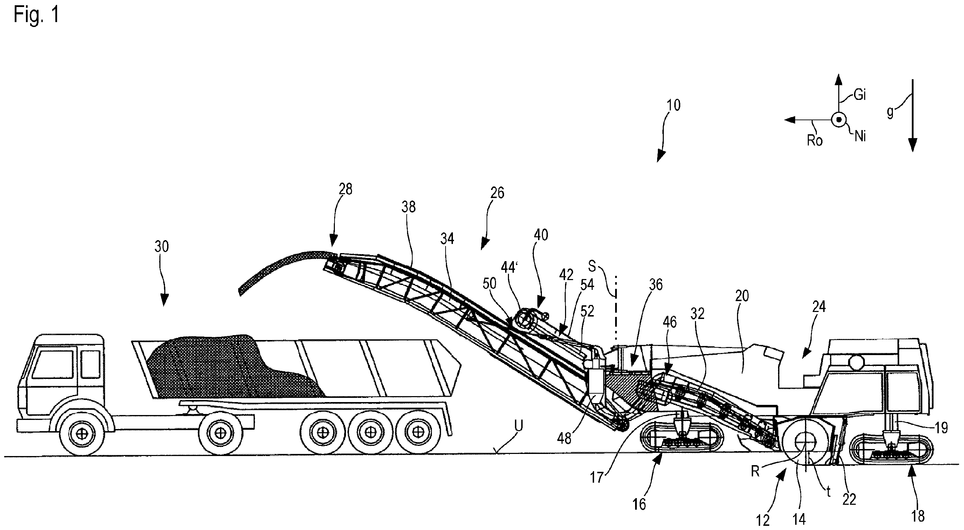

In Figur 1 ist eine erfindungsgemäße Bodenbearbeitungsmaschine (nachfolgend kurz als "Maschine" bezeichnet) allgemein mit 10 bezeichnet. Beispielhaft ist als erfindungsgemäße Maschine 10 eine Straßengroßfräse dargestellt, deren Arbeitsvorrichtung 12 mit einer an sich bekannten Fräswalze 14, wie für Straßengroßfräsen typisch, zwischen den vorderen Fahrwerken 16 und den hinteren Fahrwerken 18 angeordnet ist. Die jeweils vorzugsweise durch einen nicht dargestellten Hydromotor zur Vortriebsbewegung antreibbaren Fahrwerke 16 und 18 sind lenkbar und tragen einen Maschinenrahmen 20, welche wiederum die Arbeitsvorrichtung 12 trägt. Die Maschine 10 ist somit ein selbstfahrendes Fahrzeug.

Die Schwerkraftwirkungsrichtung ist in den Figuren 1 bis 3 mit einem Pfeil g gekennzeichnet.

Die um eine zur Zeichenebene von Figur 1 orthogonale, parallel zur Nickachse Ni der Maschine 10 verlaufende Rotationsachse R rotierbare Fräswalze 14 ist durch einen Fräswalzenkasten 22, welcher die Fräswalze 14 um die Rotationsachse R rotierbar lagert, zur Außenumgebung der Maschine 10 abgeschirmt. Der Fräswalzenkasten 22 ist zum Untergrund U, auf welchem die Maschine 10 mit den Fahrwerken 16 und 18 aufsteht, und welchen die Fräswalze 14 abträgt, hin offen, um die bestimmungsgemäße Bodenbearbeitung der Maschine 10 zu ermöglichen.

Der Maschinenrahmen 20 ist längs der Gierachse Gi höhenverstellbar über vordere Hubsäulen 17 und hintere Hubsäulen 19 mit den Fahrwerken 16 und 18 verbunden, wodurch beispielsweise die Frästiefe t der Fräswalze 14 einstellbar ist.

Die Maschine 10 ist von einem Fahrstand 24 aus steuerbar. Der Fahrstand 24 kann in an sich bekannter Weise überdacht sein.

Von der Fräswalze 14 während der bestimmungsgemäßen Bodenbearbeitung abgetragenes Bodenmaterial wird von einer Transportvorrichtung 26 von der Arbeitsvorrichtung 12 zu einem Abgabeort 28 gefördert, wo es im dargestellten Beispiel einem die Maschine 10 während der Bodenbearbeitung mit Abstand in Richtung der Rollachse Ro vorausfahrend-begleitenden Transport-Lkw 30 übergeben wird.

Die Transportvorrichtung 26 umfasst ein näher bei der Arbeitsvorrichtung 12 gelegenes Aufnahmeband 32 und ein mit dem Aufnahmeband 32 kooperierendes, weiter von der Arbeitsvorrichtung 12 entfernt gelegenes Abwurfband 34. Das Aufnahmeband 32 ist umlauffähig, aber hinsichtlich seiner relativen Orientierung zum Maschinenrahmen 20 unveränderlich am Maschinenrahmen 20 gelagert. An einer Übergabestelle 36 übergibt das Aufnahmeband 32 das von ihm geförderte Material an das Abwurfband 34, welches das übernommene Material bis zum Abgabeort 28 fördert. Das Abwurfband 34 ist ebenfalls umlauffähig, jedoch relativ zum Maschinenrahmen 20 um eine gierachsenparallele Schwenkachse S schwenkbar und um eine zur Schwenkachse S orthogonale Neigeachse neigbar, sodass der Abgabeort 28, welcher mit dem abwerfenden Längsende des Abwurfbands 34 zusammenfällt, in etwa auf der Oberfläche einer Kugelkalotte beweglich ist, um den Abgabeort 28 an das jeweilige Begleitfahrzeug anzupassen.

Die Transportvorrichtung 26 ist längs ihrer gesamten Länge durch eine Einhausung 38 eingehaust, um eine Belastung der Außenumgebung der Transportvorrichtung 26 durch Staub und durch von der Transportvorrichtung 26 möglicherweise herabfallendes Material zu vermeiden. Der über dem Aufnahmeband 32 gelegene Teil der Einhausung 38 ist größtenteils durch den Maschinenrahmen 20 realisiert.

Zur weiteren Verringerung der Schmutzemission, insbesondere Staubemission, der Maschine 10 durch die Arbeitsvorrichtung 12 umfasst diese eine Absaugeinrichtung 40 mit einer Filtervorrichtung 42.

Um anzudeuten, dass die Absaugeinrichtung 40 in unterschiedlicher Weise ausgestaltet sein kann, ist in Figur 1 die Absaugeinrichtung 40 mit einem Fördergebläse 44' am oberen Ende eines Filtergehäuses 54 dargestellt. Die Filtervorrichtung 42 ist auf der Saugseite des Fördergebläses 44' gelegen, sodass durch die Filtervorrichtung 42 gereinigte Luft das Fördergebläse 44' der Absaugeinrichtung 40 von Figur 1 durchsetzt.

Die Absaugeinrichtung 40 saugt staubbelastete Luft an einem Absaugort 46 an, der beispielsweise über dem Aufnahmeband 34 gelegen sein kann, und fördert die staubbelastete Luft in der angegebenen Reihenfolge durch einen Vorfilter 48 und durch die Filtervorrichtung 42 zu einem Abblasort 50, welcher entweder ein Auslass am Fördergebläse 44' sein kann, der direkt in die Außenumgebung der Maschine 10 abbläst, oder welcher über dem Abwurfband 34 eine Mündung in der Einhausung 38 sein kann, durch welche hindurch die gereinigte Luft wieder zurück zur Transportvorrichtung 26 gegeben wird, sodass die gereinigte Luft zusammen mit dem abgetragenen Bodenmaterial am Abgabeort 28 in die Umgebung der Maschine 10 austritt.

In der Filtervorrichtung 42 ist ein Filterkörper 52 gezeigt, dessen Längsachse im Wesentlichen parallel zur Transportrichtung bzw. zur Verlaufsrichtung des Abwurfbandes 34 orientiert ist.

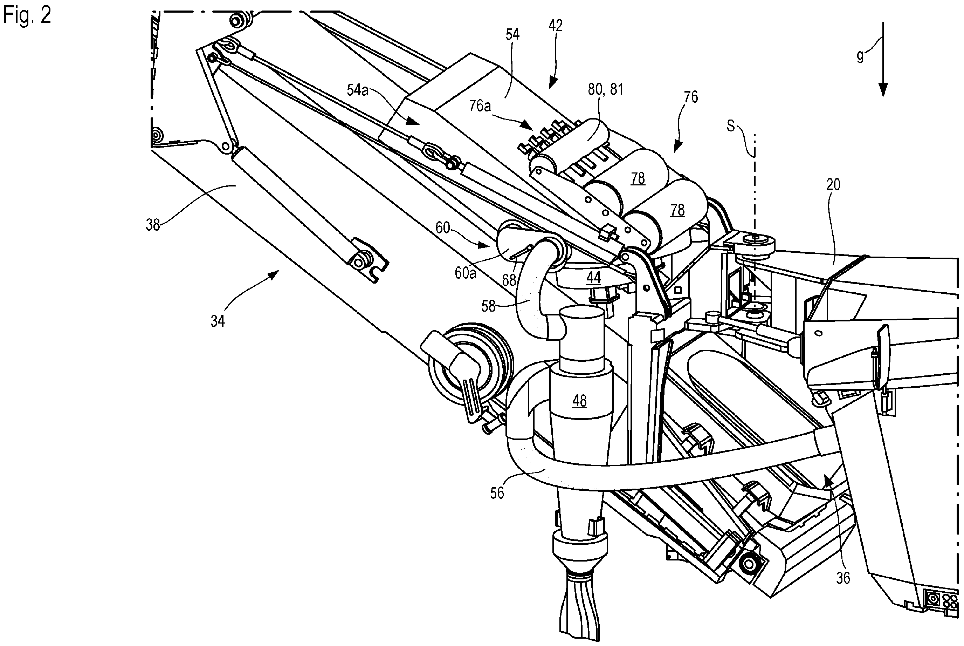

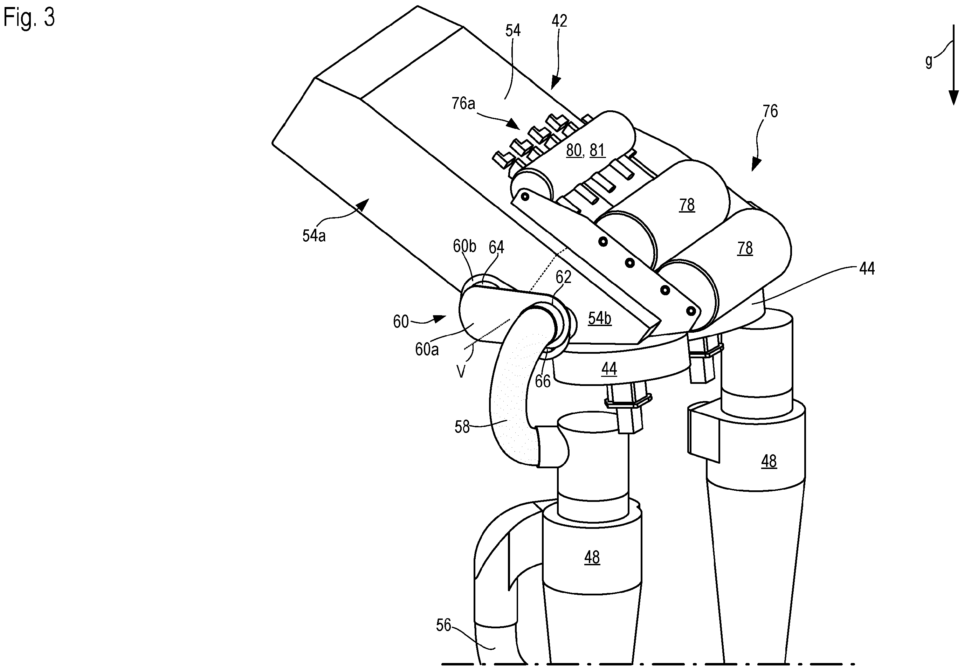

In den Figuren 2 und 3 ist die Filtervorrichtung 42 stärker detailliert als in Figur 1 dargestellt. Die Filtervorrichtung 42 umfasst das Filtergehäuse 54, in welchem im dargestellten Beispiel zwei, ganz allgemein jedoch eine Mehrzahl von Filterkörpern 52 angeordnet sind bzw. ist.

In den Figur 2 und 3 ist das Fördergebläse 44 abweichend von Figur 1 in einem unteren Abschnitt des Filtergehäuses 54 dargestellt. Jedoch liegt das Filtergehäuse 54 bzw. die Filtervorrichtung 42 wie in Figur 1 funktional auf der Saugseite des Fördergebläses 44.

Figur 3 zeigt insbesondere die spiegelsymmetrische Ausgestaltung der Absaugeinrichtung 40 hinsichtlich der ersten und der zweiten Schlauchleitungen 56 bzw. 58, der Vorfilter 48 und der Fördergebläse 44, welche jeweils je zweifach bezüglich einer von der Gierachse Gi und der Rollachse Ro aufgespannten Spiegelsymmetrieebene vorgesehen sind, wobei die Spiegelsymmetrie für einen gestreckten Bezugszustand gilt, in welchem das Abwurfband 34 und die Transportrichtung des Abwurfbandes 34 in der Spiegelsymmetrieebene gelegen sind.

Durch eine erste Schlauchleitung 56 wird vom Fördergebläse 44 staubbelastete Luft vom Absaugort 46 zu dem als Zyklonfilter ausgestalteten Vorfilter 48 gefördert, wo in an sich bekannter Weise eine Vorreinigung der staubbelasteten Luft erfolgt. Über eine zweite Schlauchleitung 58 wird die vorgereinigte und in der Regel nur noch durch Feinstaub mit einer Korngröße unterhalb einer durch den Zyklonfilter bestimmten Schwellengröße belastete Luft einem Bypass-Ventil 60 zugeführt, von wo aus die vorgereinigte Luft in das Filtergehäuse 54 eintritt.

Das Filtergehäuse 54 weist ein größeres Kompartiment 54a auf, in welchem die Filterkörper 52 aufgenommen sind, und weist ein kleineres Kompartiment 54b auf, in welchem keine Filterkörper 52 aufgenommen sind. Die Filterkörper 52 befinden sich also in einem Innenraum 57 des Filtergehäuses 54 bzw. des Kompartiments 54a.

Das Bypass-Ventil 60 umfasst ein relativ zum Filtergehäuse 54 bewegliches Ventilbauteil 60a und ein filtergehäusefestes Ventilbauteil 60b. Das bewegliche Ventilbauteil 60a kann beispielsweise um eine Ventilachse V relativ zum filtergehäusefesten Ventilbauteil 60b um 180° schwenkbar sein. Mit dem beweglichen Ventilbauteil 60a ist eine Austrittsmündung 62 der zweiten Schlauchleitung 58 als einem bezüglich des Bypass-Ventils 60 stromaufwärtigen Förderkanal über eine vom bevorzugt plattenförmig, eben ausgebildeten beweglichen Ventilbauteil 60a abstehende Anschlussformation 61 verbunden, während das filtergehäusefeste Ventilbauteil 60b zwei Eintrittsmündungen 64 und 66 aufweist, von denen die Eintrittsmündung 64 über eine Anschlussformation 63a in das Kompartiment 54a des Filtergehäuses 54 führt, in welchem Filterkörper 52 aufgenommen sind, wohingegen die Eintrittsmündung 66 über eine Anschlussformation 63b in das Kompartiment 54b ohne Filterkörper führt. Ein Handgriff 68 dient der Verstellung des Bypass-Ventils 60 zwischen seiner Filter-Betriebsstellung, in welcher das Bypass-Ventil 60 die Austrittsmündung 62 mit der Eintrittsmündung 64 verbindet, und der Bypass-Betriebsstellung, in welcher das Bypass-Ventil 60 die Austrittsmündung 62 mit der Eintrittsmündung 66 verbindet. Alternativ kann anstelle des Handgriffs 68 auch ein motorischer Antrieb zur Verstellung des Bypass-Ventils 60 zwischen seinen beiden Betriebsstellungen vorgesehen sein.

Vom filtergehäusefesten Ventilbauteil 60b können von der zum beweglichen Ventilbauteil 60a hinweisenden Grenzfläche 60b1 je eine die jeweilige Eintrittsmündung 64 bzw. 66 umgebende elastische Dichtungsformation 65a bzw. 65b abstehen, um einen Trennspalt zwischen den Ventilbauteilen 60a und 60b gasdicht zu überbrücken.

Das Fördergebläse 44 saugt Luft stets über das von Filterkörpern 52 freie, vorzugsweise kleinere Kompartiment 54b des Filtergehäuses 54 ab. Je nach Stellung des Bypass-Ventils 60 saugt dabei das Fördergebläse 44 Luft über die Filterkörper 52 im Kompartiment 54a oder unmittelbar über die Eintrittsmündung 66 ohne weitere Filterung an.

Das, vorzugsweise plattenförmige, bewegliche Ventilbauteil 60a ist dabei derart asymmetrisch gebaut, dass es diejenige Eintrittsmündung auf Seiten des filtergehäusefesten Ventilbauteils 60b verschließt, welche nicht mit der Austrittsmündung 62 des beweglichen Ventilbauteil 60a verbunden ist. So wird ein unerwünschtes Ansaugen von Falschluft durch das Fördergebläse 44 vermieden, sodass die gesamte Förderwirkung des Fördergebläses 44 sich auf den tatsächlich zur Förderung bestimmten Luftstrom bezieht.

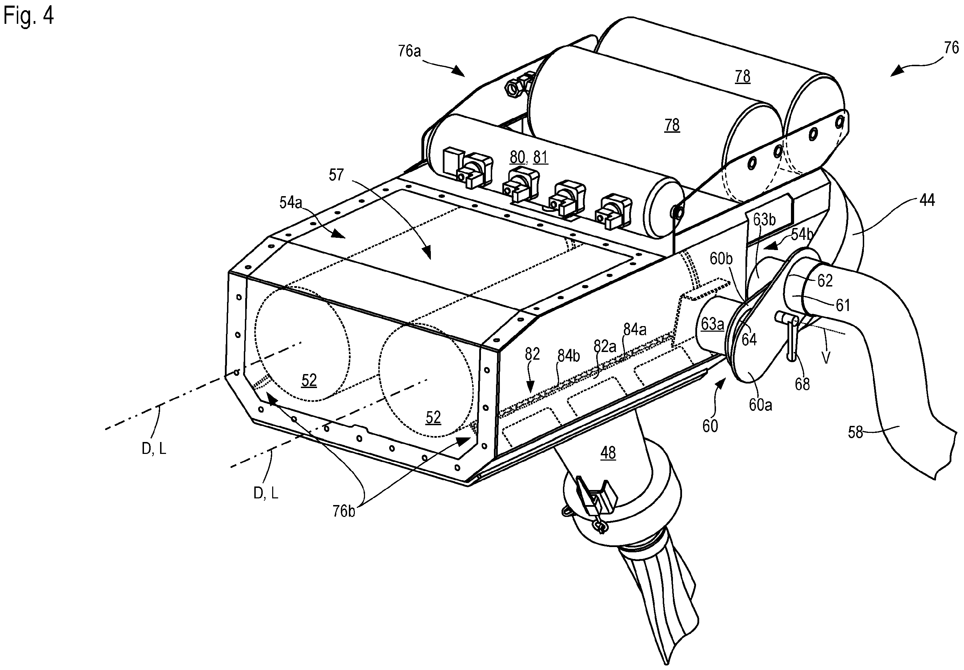

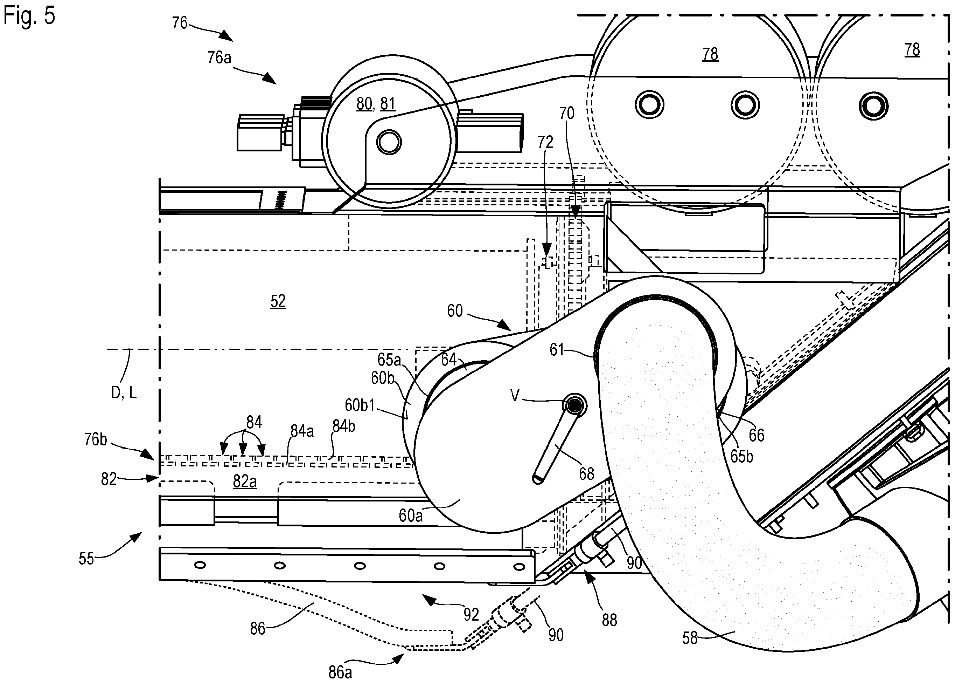

In Figur 4 sind beispielhaft zwei Filterkörper 52 strichliniert im Innenraum 57 des Kompartiment 54a dargestellt. Beide Filterkörper 52 erstrecken sich jeweils längs einer Längsachse L, die auch Drehachse D des jeweiligen Filterkörpers 52 ist. Die Filterkörper 52 sind mit parallelen Längsachsen L angeordnet. Die Filterkörper 52 sind jeweils um die Drehachse D durch einen in Figur 5 gezeigten Drehantrieb 70 drehbar.

Die Filterkörper 52 sind an nur einem Längsende fliegend an Drehlagerungen 72 gelagert, von welchen aus sie längs ihrer Längsachse L bzw. Drehachse D auskragen. Die Drehlagerungen 72, die Ausführungsformen oben genannter Filterkörperaufnahmen darstellen, sind am Filtergehäuse 54 angeordnet und weisen eine Kopplungsformation auf, mit welcher eine Gegenkopplungsformation an einem Filterkörper 52 lösbar koppelbar ist. Dadurch können Filterkörper 52 zum einen schnell getauscht und zum anderen ohne eigene Relativbewegungsmittel drehbar um die Drehachse D im Filtergehäuse 54 angeordnet werden. Der Drehantrieb 70 wirkt bevorzugt unmittelbar mit Drehlagerungen 72 zusammen, sodass der Filterkörper 52 selbst keinerlei Ausbildung für eine unmittelbare Kraftübertragung mit dem Drehantrieb 70 aufweisen muss. Der Drehantrieb 70 und die Drehlagerungen 72 können miteinander kämmende Zahnräder bzw. Zahnstrukturen aufweisen, wobei das Zahnrad des Drehantriebs 70 durch einen Motor angetrieben ist. Dieser Motor kann ein Hydromotor oder, bevorzugt, ein Elektromotor sein.

Durch die Drehbarkeit der Filterkörper 52 kann stets ein anderer Umfangsabschnitt des Filterkörpers 52 so angeordnet werden, dass er in Schwerkraftwirkungsrichtung g weist, sodass folglich die Schwerkraft ein Lösen und Abfallen von Filterkuchen unterstützt, welche sich auf der Schmutzseite von Filtermaterial der Filterkörper 52 im Filterbetrieb ansammeln. Ein Umfangsabschnitt des Filterkörpers 52 weist dann in Schwerkraftwirkungsrichtung g, wenn ein von der Oberfläche des Filtermaterials oder von der Einhüllenden des Filtermaterials ausgehender Normalenvektor wenigstens eine in Schwerkraftwirkungsrichtung verlaufende Komponente aufweist.

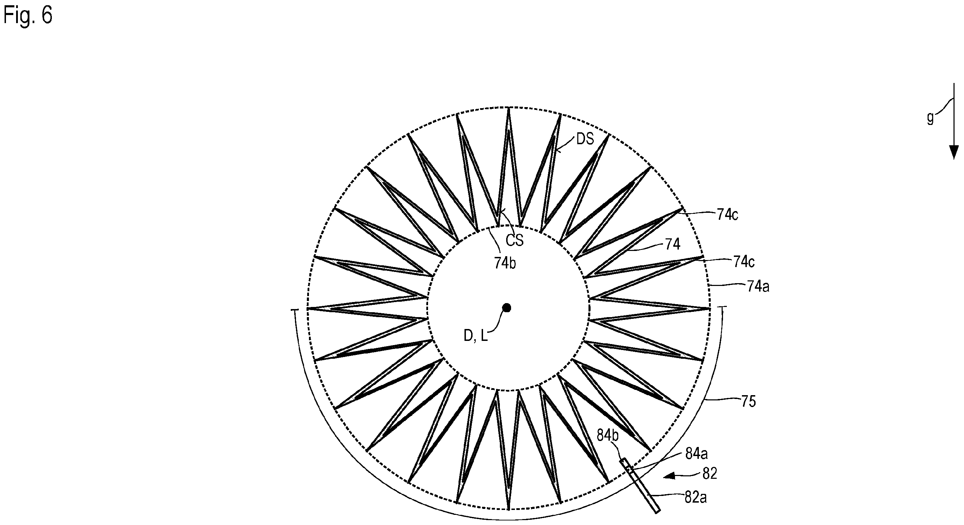

In Figur 6 ist eine simplifizierte Querschnittsansicht durch den Filterkörper 52 in einer zur Drehachse D orthogonalen Schnittebene dargestellt. Das Filtermaterial 74 ist im dargestellten Beispiel ein plissiertes Filtermaterial 74, welches zickzackförmig zwischen einer beispielhaft zylindrischen radial äußeren Einhüllenden 74a und einer beispielhaft zylindrischen radial inneren Einhüllenden 74b um die Drehachse D verläuft. Lediglich zur Erläuterung: Für die beispielhaft in Figur 6 gezeigte Schwerkraftwirkungsrichtung g weist der Umfangsabschnitt 75 des Filtermaterials 74 in Schwerkraftwirkungsrichtung g. Die von der Drehachse D wegweisende Seite des Filtermaterials 74 ist die Schmutzseite DS, auf welcher sich im Filterbetrieb Filterkuchen bildet. Die entgegengesetzte, zur Drehachse D hinweisende Seite des Filtermaterials 74 ist die Reinseite CS, auf welcher nach dem Durchgang durch das Filtermaterial 74 gereinigte Luft strömt. Das Filtermaterial 74 kann ein beliebiges poröses Material sein, wie etwa ein Filtervlies oder ein Filterpapier.

Zur Abreinigung von Filterkuchen vom Filtermaterial 74 der Filterkörper 52 weist die Filtervorrichtung 42 eine Reinigungsvorrichtung 76 auf. Die Reinigungsvorrichtung 76 umfasst im dargestellten Beispiel eine pneumatische Reinigungs-Teilvorrichtung 76a und eine mechanische Reinigungs-Teilvorrichtung 76b.

Die pneumatische Reinigungs-Teilvorrichtung 76a umfasst im dargestellten Beispiel zwei Drucklufttanks 78 und eine mit den Drucklufttanks 78 pneumatisch verbundene Ventilanordnung 80, welche dazu ausgebildet ist, Druckluft aus den Drucklufttanks 78 stoßartig zur Reinseite es des Filtermaterials 74 der Filterkörper 52 auszulassen, sodass den Luftdruck auf der Reinseite es gegenüber der Schmutzseite DS erhöhende Druckstöße auf das Filtermaterial 74 ausgeübt werden. Durch diese Druckstöße kann auf der Schmutzseite DS liegender Filterkuchen von der Schmutzseite DS gelöst oder sogar abgeworfen werden. Durch die Druckstöße kann auch eine das Lösen von Filterkuchen auf der Schmutzseite DS unterstützende Verformung des Filtermaterials 74 bewirkt werden. Im Gehäuse der Ventilanordnung 80 kann eine Steuervorrichtung 81 aufgenommen sein, welche den Betrieb der pneumatischen Reinigungs-Teilvorrichtung 76a und des Drehantriebs 70 steuert.

Die von der pneumatischen Reinigungs-Teilvorrichtung 76a bewirkten Druckstöße sind hinsichtlich ihrer Dauer oder/und des Abstandes zwischen zwei aufeinanderfolgenden Druckstößen auf die Drehbewegung der Filterkörper 52 abgestimmt, sodass sichergestellt ist, dass nicht stets der gleiche Umfangsabschnitt des Filtermaterials 74 in Schwerkraftwirkungsrichtung g weist, wenn ein Druckstoß ausgeübt wird. So kann gewährleistet werden, dass während einer Reinigungsprozedur der vollständige Umfang des Filterkörpers 52 von der Reinigungswirkung erfasst wird.

Alternativ oder, wie im dargestellten Ausführungsbeispiel, zusätzlich zur pneumatischen Reinigung ist eine mechanische Reinigungs-Teilvorrichtung 76b vorgesehen, welche die Reinigung des Filtermaterials 74 durch mechanische Belastung desselben unterstützt.

Die mechanische Reinigungs-Teilvorrichtung 76b umfasst eine Abstreiferleiste 82, welche sich längs der Längs- bzw. Drehachse L bzw. D des Filterkörpers 52 erstreckt. Bevorzugt erstreckt sich die Abstreiferleiste durch die radial äußere, im dargestellten Beispiel zylindrische Einhüllende 74a hindurch zur Drehachse D des Filterkörpers 52 hin, wie dies in Figur 6 dargestellt ist. Bei Drehung des Filterkörpers 52 um die Drehachse D streifen dann die radial äußeren Falten 74c des plissierten Filtermaterials an der Abstreiferleiste 82 ab, wodurch zum einen vorübergehend der Abstand zwischen zwei in Umfangsrichtung unmittelbar aufeinanderfolgenden radial äußeren Falten 74c vergrößert wird, sodass zwischen diesen Falten aufgenommener Filterkuchen leichter herausfallen kann, und wodurch zum anderen nach einem Ende des Anlageeingriffs der Abstreiferleiste 82 mit einer radial äußeren Falte 74c eine auf die radial äußere Falte 74c wirkende, in Umfangsrichtung verformende Kraft schlagartig endet, sodass sich die zunächst in Umfangsrichtung verformte radial äußere Falte 74c aufgrund ihrer Materialelastizität in ihre ursprüngliche Gestalt zurückstellt, was eine weitere Filterkuchen lösende Auswirkung haben kann. Schließlich streift die Abstreiferleiste 82 mechanisch an wenigstens einem Teil des Filtermaterials 74 entlang und schabt so Filterkuchen vom Filtermaterial 74 mechanisch ab.

Zur Schonung des porösen und daher möglicherweise empfindlichen Filtermaterials 74 weist die Abstreiferleiste 82 auf ihrer zur Drehachse D hinweisenden Seite eine Mehrzahl von Vorsprüngen 84 auf, welche jeweils von einem Trägerbereich 82a der Abstreiferleiste 82 zur Drehachse D und somit zum Filterkörper 52 hin auskragen. Jeder Vorsprung 84 weist dabei einen näher beim Trägerbereich 82a gelegenen, vorzugsweise einstückig mit diesem verbundenen Stegbereich 84a und einen an den Stegbereich 84a zur Drehachse D hin anschließenden, vorzugsweise einstückig mit diesem verbundenen Abstreifbereich 84b auf. Der Stegbereich 84a eines Vorsprungs 84 ist in Längsrichtung der Abstreiferleiste 82 kürzer ausgebildet als der Abstreifbereich 84b, welcher den Stegbereich 84a vorzugsweise in Längsrichtung der Abstreiferleiste 82 beidseitig überragt. Somit stellt der Abstreifbereich 84b eines jeden Vorsprungs 84 eine möglichst große Abstreiflänge bereit und definiert der Stegbereich 84a den Verformungswiderstand des Vorsprungs 84 und damit die von der Abstreiferleiste 82 auf das Filtermaterial 74 ausgeübte maximale Belastung. Die Abstreiferleiste 82 kann so in vorteilhafter Weise aus nicht-rostendem Stahlblech hergestellt sein. Vorzugsweise sind alle Vorsprünge 84 identisch ausgebildet.

Das Filtergehäuse 54 weist einen im betriebsfertig montierten Zustand der Filtervorrichtung 42 zum Abwurfband 34 hinweisenden Gehäuseboden 86 auf, welcher in Figur 5 strichliniert in einer vom restlichen Filtergehäuse 55, also dem Filtergehäuse 54 ohne Gehäuseboden 86, abgehobenen Stellung gezeigt ist. In der gewöhnlichen, nicht abgehobenen Stellung ist der Gehäuseboden 86 von der Seitenwand des Filtergehäuses 54 verdeckt.

Der Gehäuseboden 86 ist aus einem Elastomer-Material hergestellt, wie etwa Kautschuk, Gummi, Silikongummi usw. Der Gehäuseboden 86 kann durch Einlagen, wie etwa Gewebe oder Gelege, verstärkt sein, um die Reißfestigkeit des Gehäusebodens 86 zu erhöhen. Das restliche Filtergehäuse 55 ist im dargestellten Beispiel aus Metallblech gebaut. Dies muss jedoch nicht so sein. Das Filtergehäuse 54 kann mehr als nur eine Wandung aus einem Elastomer-Material aufweisen.

An seinem in der bezüglich der Schwerkraftwirkungsrichtung g geneigten Einbausituation, wie sie in den Figuren 1 bis 3 erkennbar ist, unteren Ende 86a ist der Gehäuseboden 86 mit einem am Filtergehäuse 54 oder an der Einhausung 38 festgelegten Aktuator 88 gekoppelt. Der Aktuator 88 kann ein pneumatischer oder ein hydraulischer Aktuator sein und kann etwa eine aus einem Zylinder ausfahrbare und in diesen einziehbare Kolbenstange als Betätigungsglied 90 umfassen, oder kann ein elektrischer oder elektromagnetischer Aktuator sein, dessen Betätigungsglied 90 elektrisch oder elektromagnetisch verlagerbar ist.

In seiner ausgefahrenen Stellung ist das Betätigungsglied 90 des Aktuators 88 strichliniert gezeigt. In dieser ausgefahrenen Stellung des Betätigungsglied 90 ist das untere Längsende 86a des Gehäuseboden 86 vom restlichen Filtergehäuse 55 abgehoben, sodass zwischen dem Gehäuseboden 86, genauer zwischen dessen unterem Längsende 86a und dem restlichen Filtergehäuse 55 eine Auslassöffnung 92 gebildet ist, durch welche hindurch Material zur Transportvorrichtung 26, genauer zum Abwurfband 34 hin aus dem Innenraum 57 des Filtergehäuses 54 ausgelassen werden kann, welches sich im Filtergehäuse 54, insbesondere in dem die Filterkörper 52 aufnehmenden Kompartiment 54a im Laufe des Betriebs angesammelt hat. Es handelt sich dabei in der Regel um Material, welches die abgesaugte Luft mitgeführt hat, und welches durch die Filterkörper 52 aus der Luft herausgefiltert wurde oder/und welches sich an den Innenwänden des Filtergehäuses 54 abgelagert hat. Das Material kann abgetragenes Bodenmaterial in Form von Staub bis hin zu Scherben von verbacktem Material umfassen.

Das abgetragene Bodenmaterial weist üblicherweise eine hohe Feuchte auf, da in den Fräswalzenkasten 22 üblicherweise Wasser eingespritzt wird, um eine übermäßige Staubentwicklung zu unterbinden und die Fräsmeißel zu kühlen. Das mineralische abgetragene Bodenmaterial neigt in feuchter Umgebung zum Verbacken, eine Eigenschaft die man sich gerade für das Binden von Staub durch Einspritzen von Wasser zunutze macht. Es können sich so mineralische, steinharte Ablagerungen an den Innenflächen des Filtergehäuses bilden.

Die verformbare Ausbildung des Gehäusebodens 86 durch Verwendung von Elastomer-Material hat noch eine weitere vorteilhafte Wirkung: durch gezielte Verformbarkeit des Gehäuseboden 86 kann daran anbackendes Bodenmaterial vom Gehäuseboden 86 gelöst werden. Gleiches gilt für jede andere Wand des Filtergehäuses 54, die ebenfalls durch Verformbarkeit orthogonal zu ihrer Wandfläche von daran anbackendem Bodenmaterial befreit werden kann. Deshalb ist es von Vorteil, wenn weitere Wände des Filtergehäuses 54 aus Elastomer-Material oder durch dünnes Stahlblech mit verhältnismäßig geringem Biege- oder Walkwiderstand gebildet sind.

Die Verformung einer elastomeren Wand des Filtergehäuses 54 kann in einfacher Weise durch die Reinigungsvorrichtung 76, genauer durch die pneumatische Reinigungs-Teilvorrichtung 76a erfolgen. Wenn diese den Druck im Innenraum 57 des Filtergehäuses 54 erhöht, Beulen sich die verformbaren Wände des Filtergehäuses 54 nach außen, wodurch daran festbackende, gebundene mineralische Schichten von abgetragenem Bodenmaterial abplatzen und als Scherben im Innenraum 57 des Filtergehäuses 54 lose herumliegen können. Die abgeplatzten Scherben können dann durch die Auslassöffnung 92 an die Transportvorrichtung 26 abgegeben und von dieser zum Abwurf am Abgabeort 28 transportiert werden. Die Ventilanordnung 80 kann in einfacher Weise über daran angeschlossene Pneumatik-Leitungen den Druck im Innenraum 57 des Filtergehäuses 54, insbesondere im Kompartiment 54a, erhöhen.

Die Ventilanordnung 80 kann von Fahrstand 24 aus betätigbar sein. Die Steuervorrichtung 81 kann außerdem einen Reinigungsvorgang des Filtergehäuses 54 in vorbestimmten Zeitabständen durch entsprechende Ansteuerung der Ventilanordnung 80 auslösen.

So, wie die pneumatische Reinigungs-Teilvorrichtung 76a einen Überdruck im Filtergehäuse 54 erzeugen kann, kann das Fördergebläse 44 einen Unterdruck im Filtergehäuse 54 erzeugen, da das Filtergehäuse 54 auf der Saugseite des Fördergebläses 44 liegt. Durch geeignete Abstimmung des Betriebs der pneumatischen Reinigungs-Teilvorrichtung 76a und des Fördergebläses 44 aufeinander, etwa durch einen alternierenden Betrieb dieser Einrichtungen, kann das Filtergehäuse 54 und damit seine Wände einer wechselnden Überdruck-Unterdruck-Belastung ausgesetzt werden, was eine Walkbewegung von Wänden des Filtergehäuses 54 zur Ablösung von daran anbackendem ausgehärtetem Bodenmaterial weiter erleichtert.

Die Drucklufttanks 78 können, gegebenenfalls ebenfalls über die Ventilanordnung 80, an einen bordeigenen Kompressor angeschlossen sein, der für ein konstantes oder quasi-konstantes Druckluftniveau in den Drucklufttanks 78 sorgt.

## Patentansprüche

1. Mobile Bodenbearbeitungsmaschine (10), wie etwa Straßenfräse, Recycler oder Surface-Miner, umfassend
- eine Arbeitsvorrichtung (12) zur Material abtragenden Bearbeitung eines Bereichs eines Bodens (U), und
- eine Absaugeinrichtung (40), welche dazu ausgebildet ist, staubbelastete Luft an wenigstens einem Absaugort (46) aus wenigstens einem Maschinenbereich abzusaugen und abgesaugte Luft an einem vom Absaugort (46) verschiedenen Abblasort (50) auszublasen,
wobei die Absaugeinrichtung (40) eine längs eines Betriebsströmungswegs vom wenigstens einen Absaugort (46) zum Abblasort (50) angeordnete Filtervorrichtung (42) aufweist, wobei die Filtervorrichtung (42) umfasst:
- ein Filtergehäuse (54),
- einen im Filtergehäuse (54) aufgenommenen Filterkörper (52), wobei der Filterkörper (52) dazu ausgebildet ist, Staubpartikel aus der die Filtervorrichtung (42) durchströmenden Luft zu entfernen, und
**dadurch gekennzeichnet, dass** die Filtervorrichtung (42) eine Verformungsaktuatoranordnung (44, 76a) aufweist, welche mit wenigstens einer Wand (86) des Filtergehäuses (54) derart Kraft übertragend in Wechselwirkung steht, dass durch Betätigung der Verformungsaktuatoranordnung (44, 76a) die wenigstens eine Wand (86) des Filtergehäuses (54) orthogonal zu seiner Wandfläche verformbar ist.

2. Mobile Bodenbearbeitungsmaschine (10) nach Anspruch 1,
**dadurch gekennzeichnet, dass** die wenigstens eine verformbare Wand (86) des Filtergehäuses (54) aus einem Werkstoff mit einem geringeren Elastizitätsmodul gebildet ist als andere Wände des Filtergehäuses (54).

3. Mobile Bodenbearbeitungsmaschine (10) nach Anspruch 1 oder 2,
**dadurch gekennzeichnet, dass** die wenigstens eine verformbare Wand (86) des Filtergehäuses (54) aus einem Kunststoff, insbesondere einem Elastomer, wie etwa Gummi oder Silikonkautschuk gebildet ist oder einen solchen Werkstoff wenigstens abschnittsweise umfasst.

4. Mobile Bodenbearbeitungsmaschine (10) nach einem der vorhergehenden Ansprüche,
**dadurch gekennzeichnet, dass** die Absaugeinrichtung (40) ein Fördergebläse (44) aufweist, wobei bevorzugt die Filtervorrichtung (42), insbesondere der Filterkörper (52), auf der Saugseite des Fördergebläses (44) angeordnet ist.

5. Mobile Bodenbearbeitungsmaschine (10) nach Anspruch 4,
**dadurch gekennzeichnet, dass** die Verformungsaktuatoranordnung (44, 76a) das Fördergebläse (44) als einen Verformungsaktuator umfasst oder ist.

6. Mobile Bodenbearbeitungsmaschine (10) nach einem der vorhergehenden Ansprüche,
**dadurch gekennzeichnet, dass** die Bodenbearbeitungsmaschine (10) eine Reinigungsvorrichtung (76) aufweist, welche dazu ausgebildet ist, Staubpartikel, die sich im Filterbetrieb am Filterkörper (52) ansammeln, vom Filterkörper (52) zu entfernen, wobei die Reinigungsvorrichtung (76) eine Pneumatikvorrichtung (76a) aufweist, welche dazu ausgebildet ist, auf einer Reinseite (CS) den Luftdruck über den auf der Schmutzseite (DS) herrschenden Luftdruck hinaus zu erhöhen.

7. Mobile Bodenbearbeitungsmaschine (10) nach Anspruch 6,
**dadurch gekennzeichnet, dass** die Verformungsaktuatoranordnung (44, 76a) die Pneumatikvorrichtung (76a) als einen Verformungsaktuator umfasst oder ist.

8. Mobile Bodenbearbeitungsmaschine (10) nach den Ansprüchen 5 und 7,
**dadurch gekennzeichnet, dass** die Verformungsaktuatoranordnung (44, 76a) sowohl das Fördergebläse (44) als auch die Pneumatikvorrichtung (76a) als Verformungsaktuatoren aufweist, wobei die Verformungsaktuatoranordnung (44, 76a) zur schwellenden oder/und wechselnden Druckbeaufschlagung des Innenraums (75) des Filtergehäuses (54) ausgebildet ist.

## Claims

1. A mobile earth working machine (10), for example a road milling machine, recycler, or surface miner, encompassing:
- a working apparatus (12) for material-removing working of a region of a substrate (U); and
- an extraction device (40) that is embodied to extract dust-laden air from at least one machine region at at least one extraction location (46), and to exhaust extracted air at a discharge location (50) different from the extraction location (46),
the extraction device (40) comprising a filter apparatus (42) arranged along an operational flow path from the at least one extraction location (46) to the discharge location (50), the filter apparatus (42) encompassing:
- a filter housing (54);
- a filter element (52) received in the filter housing (54), the filter element (52) being embodied to remove dust particles from the air flowing through the filter apparatus (42),
**characterized in that** the filter apparatus (42) comprises a deformation actuator arrangement (44, 76a) that interacts force-transferringly with at least one wall (86) of the filter housing (54) in such a way that by actuation of the deformation actuator arrangement (44, 76a), the at least one wall (86) of the filter housing (54) is deformable orthogonally to its wall surface.

2. The mobile earth working machine (10) according to Claim 1,
**characterized in that** the at least one deformable wall (86) of the filter housing (54) is constituted from a material having a lower modulus of elasticity than other walls of the filter housing (54).

3. The mobile earth working machine (10) according to Claim 1 or 2,
**characterized in that** the at least one deformable wall (86) of the filter housing (54) is constituted from a plastic, in particular an elastomer, for instance vulcanized rubber or silicone rubber, or encompasses such a material at least in portions.

4. The mobile earth working machine (10) according to one of the preceding claims,
**characterized in that** the extraction device (40) comprises a conveying fan (44), the filter apparatus (42), in particular the filter element (52), preferably being located on the intake side of the conveying fan (44).

5. The mobile earth working machine (10) according to Claim 4,
**characterized in that** the deformation actuator arrangement (44, 76a) encompasses or is the conveying fan (44) constituting a deformation actuator.

6. The mobile earth working machine (10) according to one of the preceding claims,
**characterized in that** the earth working machine (10) comprises a cleaning apparatus (76) that is embodied to remove from the filter element (52) dust particles that collect on the filter element (52) during filtering operation; the cleaning apparatus (76) comprising a pneumatic apparatus (76a) that is embodied to increase the air pressure on a clean side (CS) above the air pressure existing on the dirt side (DS).

7. The mobile earth working machine (10) according to Claim 6,
**characterized in that** the deformation actuator arrangement (44, 76a) encompasses or is the pneumatic apparatus (76a) constituting a deformation actuator.

8. The mobile earth working machine (10) according to Claims 5 and 7,
**characterized in that** the deformation actuator arrangement (44, 76a) comprises both the conveying fan (44) and the pneumatic apparatus (76a) as deformation actuators, the deformation actuator arrangement (44, 76a) being embodied for oscillating and/or alternating pressure impingement on the interior space (75) of the filter housing (54).

## Revendications

1. Machine mobile de travail du sol (10), telle qu'une fraiseuse routière, un recycleur ou un surface-miner, comprenant
- un dispositif de travail (12) pour le traitement par enlèvement de matière d'une zone d'un sol (U), et
- un dispositif d'aspiration (40), qui est conçu pour aspirer l'air chargé de poussière en au moins un lieu d'aspiration (46) hors d'au moins une zone de la machine et pour souffler l'air aspiré en un lieu de soufflage (50) différent du lieu d'aspiration (46),
dans lequel le dispositif d'aspiration (40) présente un dispositif de filtrage (42) disposé le long d'un trajet d'écoulement d'opération depuis ledit au moins un lieu d'aspiration (46) jusqu'au lieu de soufflage (50), le dispositif de filtrage (42) comprenant :
- un boîtier de filtre (54),
- un corps de filtre (52) logé dans le boîtier de filtre (54), dans lequel le corps de filtre (52) est conçu pour éliminer les particules de poussière de l'air traversant le dispositif de filtrage (42), et
**caractérisé en ce que**
le dispositif de filtrage (42) présente un agencement d'actionneur de déformation (44, 76a) qui interagit avec au moins une paroi (86) du boîtier de filtre (54) en transmettant des forces de telle sorte que, par actionnement de l'agencement d'actionneur de déformation (44, 76a), ladite au moins une paroi (86) du boîtier de filtre (54) est déformable orthogonalement à sa surface de paroi.

2. Machine mobile de travail du sol (10) selon la revendication 1,
**caractérisé en ce que** ladite au moins une paroi déformable (86) du boîtier de filtre (54) est formée d'un matériau ayant un module d'élasticité plus faible que les autres parois du boîtier de filtre (54).

3. Machine mobile de travail du sol (10) selon la revendication 1 ou 2,
**caractérisé en ce que** ladite au moins une paroi déformable (86) du boîtier de filtre (54) est formée d'une matière plastique, en particulier d'un élastomère tel que du caoutchouc ou du caoutchouc de silicone, ou comprend un tel matériau au moins par tronçons.

4. Machine mobile de travail du sol (10) selon l'une des revendications précédentes,
**caractérisé en ce que** le dispositif d'aspiration (40) présente une soufflerie de transport (44), dans lequel le dispositif de filtrage (42), en particulier le corps de filtre (52), est de préférence disposé du côté aspiration de la soufflerie de transport (44).

5. Machine mobile de travail du sol (10) selon la revendication 4,
**caractérisé en ce que** l'ensemble d'actionneurs de déformation (44, 76a) comprend ou représente la soufflerie de transport (44) en tant qu'actionneur de déformation.

6. Machine mobile de travail du sol (10) selon l'une des revendications précédentes,
**caractérisé en ce que** la machine de travail du sol (10) comporte un dispositif de nettoyage (76) configuré pour éliminer du corps de filtre (52) les particules de poussière qui s'accumulent sur le corps de filtre (52) en mode filtration, dans lequel le dispositif de nettoyage (76) comporte un dispositif pneumatique (76a) configuré pour augmenter, sur un côté propre (CS), la pression d'air au-delà de la pression d'air régnant sur le côté sale (DS).

7. Machine mobile de travail du sol (10) selon la revendication 6,
**caractérisé en ce que** l'ensemble d'actionneurs de déformation (44, 76a) comprend ou représente le dispositif pneumatique (76a) comme un actionneur de déformation.

8. Machine mobile de travail du sol (10) selon les revendications 5 et 7,
**caractérisé en ce que** l'agencement d'actionneurs de déformation (44, 76a) comprend aussi bien le ventilateur de transport (44) que le dispositif pneumatique (76a) en tant qu'actionneurs de déformation, dans lequel l'agencement d'actionneurs de déformation (44, 76a) est conçu pour la mise sous pression fluctuante ou/et alternante de l'espace intérieur (75) du boîtier de filtre (54).
